# EUROPÄISCHE PATENTSCHRIFT

(11) **EP 1 711 914 B1**
(45) Veröffentlichungstag und Bekanntmachung des Hinweises auf die Patenterteilung: **02.09.2009**
(21) Anmeldenummer: 05700356.8
(22) Anmeldetag: 03.02.2005
(51) Int. Cl.: G06K 19/077, G11B 23/28

(54) **RESONANZETIKETTE ZUR ANBRINGUNG AN EINEM MIT EINER METALLISIERUNG VERSEHENEN DATENTRÄGER**
RESONANT LABEL FOR APPLYING TO A DATA CARRIER THAT IS PROVIDED WITH A METALLISATION
ETIQUETTE DE RESONANCE A FIXER SUR UN SUPPORT DE DONNEES MUNI D'UNE METALLISATION

(30) Priorität: 04.02.2004 CH 164042004
(43) Veröffentlichungstag der Anmeldung: 18.10.2006
(73) Patentinhaber: Bibliotheca Rfid Library Systems AG, 6300 Zug (CH)
(72) Erfinder: NAUER, Marcel, CH-6315 Oberägeri (CH)
(74) Vertreter: Lauer, Joachim
(86) Internationale Anmeldenummer: PCT/CH2005/000061
(87) Internationale Veröffentlichungsnummer: WO 2005/076205

(56) Entgegenhaltungen:
- EP-A- 0 996 124
- EP-A- 1 031 939
- EP-A- 1 302 893
- WO-A-00/23994
- WO-A-20/04099821
- DE-A1- 19 920 449
- DE-A1- 19 963 157

## Beschreibung

### TECHNISCHES GEBIET

Die vorliegende Erfindung betrifft eine Resonanzetikette an einem mit einer Metallisierung versehenen Datenträger wie einer CD, einer DVD oder einer MO gemäss dem Oberbegriff des Patentanspruchs 1..

### STAND DER TECHNIK

Resonanzetiketten mit Resonanzfrequenzen im RF-Bereich (Radiofrequenzbereich) zwischen 10 MHz und 20 MHz werden schon seit langem zur Diebstahlssicherung von Gegenständen verwendet. Die auch als Transponder bezeichneten Resonanzetiketten sind mit einem Schwingkreis versehen, welcher in einem auf seine Resonanzfrequenz abgestimmten elektromagnetischen Feld eines z.B. im Ausgangsbereich eines Ladengeschäftes plazierten Senders angeregt wird und aus dem Feld Energie absorbiert. Diese Absorption kann detektiert und daraufhin kann z.B. ein Alarm ausgelöst werden. Die entsprechende Technik wird auch mit EAS (electronic article surveyance) bezeichnet.

Seit einiger Zeit sind darüber hinaus Resonanzetiketten verfügbar, die mit einem Halbleiterchip ausgerüstet sind, welcher mit dem Schwingkreis verbunden ist und über diesen mit elektrischer Energie versorgbar und ansprechbar ist. In dem Halbleiterchip können Informationen bezüglich der Identität des mit der jeweiligen Resonanzetikette versehenen Objektes gespeichert und über eine gewisse Distanz mittels Radiofrequenzsignalen abgefragt oder verändert werden. Die entsprechende Technik wird allgemein mit RFID (radio frequency identification) bezeichnet. RFID ermöglicht über die Diebstahlsicherung hinaus eine Vielzahl weiterer Anwendungsmöglichkeiten insbesondere im Bereich der Logistik und der. Inventarisierung. Im Bibliotheksbereich sowie bei Videotheken kann mittels RFID das Ausleih- und Bestandserfassungssystem automatisiert werden.

Sowohl bei EAS- als auch RFID-Anwendungen ergeben sich jedoch Probleme im Zusammenhang mit Datenträgern, die wie CD's, DVD's oder MO's als optische Reflexionsschicht eine metallisierte Fläche aufweisen. Durch diese Metallisierung wird ein erheblicher Teil der Leistung aus dem für die Kommunikation mit den Resonanzetiketten erzeugten elektromagnetischen Feld absorbiert und/oder abgeschirmt, der den Resonanzetiketten nicht mehr zur Verfügung steht. Zumindest die Reichweite der Kommunikation leidet hierunter.

Um dieses Problem zu vermeiden, werden die Resonanzetiketten zumeist gar nicht auf den Datenträgern selbst sondern an ihren Behältnissen wie der sogenannten Jewel-Box im Falle von CD's oder DVD's befestigt. Das hat aber ersichtliche Nachteile insbesondere hinsichtlich des Diebstahlsschutzes, weil die Datenträger in der Regel einfach aus ihren Behältnissen entnommen werden können. Hinsichtlich der Bestandskontrolle könnte ein falscher Datenträger in einem Behältnis enthalten sein. Es besteht von daher ein Bedürfnis, auch metallisierte Datenträger unmittelbar mit Resonanzetiketten versehen zu können.

Die auf dem eingangs erwähnten Datenträger aufgebrachten, speziellen RFID-Resonanzetiketten sind kreisringförmig ausgebildet und in die innere, nicht mit Daten beschriebene und deshalb auch nicht immer metallisierte Zone dieser Datenträger rund um das zentrale Loch eingeklebt, wo sie mit gewissen Einschränkungen auch detektierbar sind. Mit Datenträgern wie CD's oder DVD's, die komplett, also auch in der genannten inneren Zone, metallisiert sind, funktionieren aber auch diese speziellen Resonanzetiketten nicht mehr.

Generell besteht die Tendenz, die Resonanzetiketten so kleinflächig wie irgend möglich auszubilden, weil dadurch bei der Herstellung Material eingespart und die Resonanzetiketten insgesamt rationeller und kostengünstiger hergestellt werden können. Auch sollen die Resonanzetiketten auf den mit ihnen versehenen Objekten im allgemeinen natürlich möglichst wenig Platz beanspruchen, auffallen und stören.

Aus EP 1 302 893 A1 ist ein opto-elektronischer Datenträger mit einer RFID-Resonanzetikette bekannt, die gross ausgebildet und mit einer im wesentlichen am äusseren Rand des Datenträgers entlang geführten Windung versehen ist.

Aus DE 199 63 157 A1 ist ein scheibenförmgier Informationsträger bekannt, bei welchem eine äussere Antennenwindung ebenfalls am äusseren Rand des Datenträgers entlang geführt und ein Sender/Empfänger nahe dessen zentralem Loch angeordnet ist. Diese, einen Schwingkreis bildenden Komponenten sind in den Datenträger integriert oder, im Falle der Antennenwindung, ggf. auf dem Datenträger aufgedampft.

Aus DE 199 20 449 A1 ist ein Speicherchip und eine Antennenanordnung auf einem optischen Aufzeichnungsmedium ensprechend einem Datenträger der betrachteten Art aufgeklebt, wobei der Speicherchip auf dem inneren, vermutlich nicht Daten beschriebenen Ring und die Antennenanordnung entweder ebenfalls auf diesem Ring oder auf der äusseren Peripherie des Datenträgers angeordnet ist.

Aus EP 0 996 124 A1 ist ein optischer Datenträger bekannt mit einem Speicherchip und einer Antennenanordnung, welche jeweils auf der äusseren Peripherie des Datenträgers angeordnet sind.

EP 1031 939 offenbart eine Chipkarte im Kredikartenformat mit einem Chip-Modul sowie einem Schwingkreis mit zwei Spulen. Die Windungen einer dieser Spulen sind im wesentlichen entlang des äusseren Randes der Karte geführt. Die andere Spule steht mit einer weiteren, dem Chip-Modul zugehörigen Spule in Transformator-Kopplung.

### DARSTELLUNG DER ERFINDUNG

Aufgabe der vorliegenden Erfindung ist es anzugeben, wie die Kommunikation mit einem Datenträger mit einer metallisierten Faläche wie einer CD, einer DVD oder einer MO der eingangs genannten Art bzw. der darauf angebrachten Resonanzetikette verbessert bzw. bezüglich vollständig metallisierter Datenträger überhaupt ermöglicht werden kann.

Diese Aufgabe wird erfindungsgemäss gelöst durch einen Datenträger mit den Merkmalen des Patentanspruchs 1.

Durch die so mit grösstmöglichem Umfang geführte äussere Windung der weiteren Resonanzetikette wird eine Antennenstruktur erzeugt, durch welche in überraschender Weise so viel Leistung aufgenommen bzw. abgegeben werden kann, dass die gewünschte Kommunikation selbst bei vollständiger Metallisierung der Datenträger noch möglich ist.

Gemäss einer ersten bevorzugten Ausführungsform weist die weitere Resonanzetikette als Teil ihres elektrischen Schwingkreises noch mindestens eine innere Windung auf, wobei zwischen der äusseren und der mindestens einen inneren Windung ein grösserer, vorzugsweise wenigstens etwa dem halben Radius der äusseren Windung entsprechender Abstand belassen ist. Für die meisten Anwendungen werden lediglich eine, allenfalls zwei innere Windungen bereits genügen. Die für die Ausbildung der Schwingkreiskapazität erforderlichen Kondensatorplatten können im Abstandsbereich zwischen der äusseren und der mindestens einen inneren Windung angeordnet werden.

Die weitere Resonanzetikette dient der speziellen RFID-Etikette als sogenanntes Booster-Label, wie dies nachstehend noch erläutert werden wird.

In an sich üblicher Weise ist die weitere Resonanzetikette auf der Basis eines elektrisch isolierenden flächigen Substrats aufgebaut sein, auf welchem die erwähnten Windungen und die Kondensatorplatten als Leiterbahnen ausgebildet sind. Damit die üblicherweise auf den Datenträgern vorhandene Beschriftung bzw. der üblicherweise ebenfalls vorhandene Aufdruck erkennbar bleibt, ist das Substrat transparent. Das gilt natürlich auch für die Mittel zur Befestigung des Substrats auf dem Datenträger, wobei hierbei einfach eine transparente Kleberschicht verwendet werden kann.

Bei der ersten bevorzugten Ausführungsform kommt der Erkennbarkeit der Beschriftung bzw. des Aufdrucks auf dem Datenträger auch entgegen, dass die weitere Resonanzetikette, insbesondere wenn sie für eine Resonanzfrequenz von 13.56 MHz ausgebildet ist, mit nur zwei oder allenfalls drei schmalen Windungen für die Ausbildung der Schwingkreisinduktivität bzw. der Antennenstruktur auskommt, und dass zwischen der äusseren und der mindestens einen inneren Windung ein relativ grosser Abstand belassen ist. Die Windungen fallen dadurch optisch vor dem Hintergrund des Aufdrucks so gut wie nicht auf. Das gilt auch für die Kondensatorplatten, selbst wenn diese im Abstandsbereich zwischen den Windungen angeordnet werden, weil sie flächenmässig ebenfalls für die erwähnte Frequenz relativ klein ausgeführt werden können.

Damit die weitere Resonanzetikette optimal auf einer CD, einer DVD oder einer MO angebracht werden kann, ist sie vorzugsweise ringförmig, insbesondere kreisringförmig ausgebildet. Sie erzeugt dann auch keine störenden Unwuchten auf den Datenträgern, wenn diese abgespielt werden.

Die Metallisierung der Datenträger bewirkt ausser der erwähnten Absorption und Abschirmung zusätzlich noch eine gewisse Verstimmung des Schwingkreises durch sogenannte Streukapazitäten, was dazu führen kann, dass die Resonanzfrequenz der Resonanzetikette nicht mehr genau genug mit der Frequenz übereinstimmt, auf welche die übrige Systemelektronik, insbesondere die Sender und Empfänger zur Detektion der Resonanzetiketten eingestellt sind. Geeignete Mittel, um dem entgegenzuwirken, sind eine gewisse Vorverstimmung der Schwingkreisfrequenz und/oder eine wenn auch nur geringe Vergrösserung des Abstandes zwischen der Resonanzetikette und dem Datenträger zur Reduzierung der Streukapazitäten z.B. durch eine besonders dicke Kleberschicht oder eine zusätzliche Zwischenlage, insbesondere durch eine solche mit besonders niedriger dielektrischer Konstante ε.

Die beiden Resonanzetiketten sind bevorzugt in gegenseitiger elektromagnetischer Kopplung angeordnet. Selbstverständlich sollten die Schwingkreise beider Resonanzetiketten dabei möglichst genau auf die gleiche Resonanzfrequenz abgestimmt sein. Die vorerwähnte Verstimmung der Resonanzfrequenzen ist hierbei ggf. zu berücksichtigen.

Eine besonders gute gegenseitige elektromagnetische Kopplung ergibt sich, wenn die RFID-Resonanzetikette vollständig innerhalb der Windungen der weiteren Resonanzetikette angeordnet ist. In diesem Bereich wird nämlich das elektromagnetische Feld eines äusseres Senders durch die weitere Resonanzetikette konzentriert. Umgekehrt wird ein von der RFID-Reonanzetikette erzeugtes Signal durch die weitere Resonanzetikette von dort optimal aufgenommen und nach aussen effektiver ausgesendet. Die weitere Resonanzetikette funktioniert für die RFID-Resonanzetikette dadurch quasi wie ein Wellensammler bzw. Booster.

Nach der Erfindung ist nur die kleine RFID-Resonanzetikette mit einem Halbleiterchip versehen. Kleinere Etiketten lassen sich im allgemeinen kostengünstiger mit einem Halbleiterchip versehen als grosse.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine erste Ausführungsform einer weiteren Resonanzetikette und zwar unter Fig. 1a in Aufsicht auf ihre Vorderseite und unter Fig. 1b schematisch im Schnitt (A-A);
- Fig. 2: die Resonanzetikette von Fig. 1 aufgeklebt auf eine CD; und
- Fig. 3: die CD von Fig. 2 mit einer Etikette in ihrem zentralen Bereich, welche eine RFID-Etikette ist.

### WEGE ZUR AUSFÜHRUNG DER ERFINDUNG

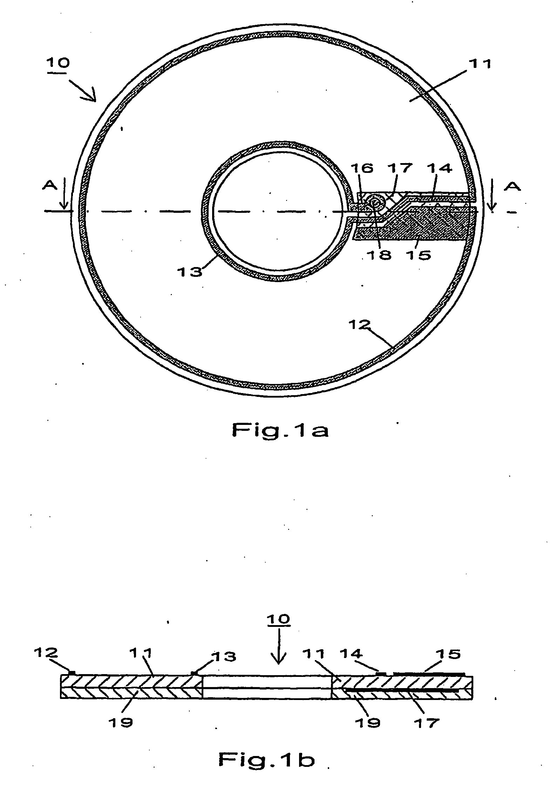

Die Resonanzetikette 10 von Fig. 1 weist auf einem kreisringförmigen transparenten Foliensubstrat 11 mit zentralem Loch vorder- und rückseitig jeweils Leiterbahnen z.B. aus Aluminium auf, welche zusammen einen elektrischen Schwingkreis mit Spule bzw. Induktivität und Kondensator bzw. Kapazität bilden. Der Schwingkreis kann z.B. auf eine Frequenz im RF-Bereich von 13.56 MHz abgestimmt sein. Auf der in Fig. 1a dargestellten Vorderseite umfassen die Leiterbahnen eine äussere Windung 12, eine innere Windung 13 sowie eine Querverbindung 14 zwischen der äusseren 12 und der inneren Windung 13. An das freie Ende der äusseren Windung 12 schliesst sich eine erste Kondensatorplatte 15 und an das freie Ende der inneren Windung eine Kontaktzone 16 an. Eine zu der ersten Kondensatorplatte 15 korrespondierende zweite Kondensatorplatte 17 ist auf der Rückseite des Foliensubstrats in Überdeckung mit der ersten Kondensatorplatte 15 ausgebildet und wegen der Transparenz des Foliensubstrats durch dieses hindurch teilweise sichtbar. Mittels einer z.B. durch eine Verkrimpung hergestellten Durchkontaktierung 18 ist die Kontaktzone 16 mit der rückseitigen zweiten Kondensatorplatte 17 durch das Foliensubstrat 11 hindurch elektrisch verbunden. Die Rückseite des Substrats 11 ist noch mit einer ebenfalls transparenten Kleberschicht 19 versehen.

Zwischen der äusseren Windung 12 und der inneren Windung 13, welche zusammen die Schwingkreisinduktivität bilden, ist in ungewöhnlicher Weise ein erheblicher Abstand belassen. In diesem Abstandsbereich sind lediglich die Kondensatorplatten 15 und 17 angeordnet. Die äussere Windung 12 umschliesst insgesamt eine verhältnismässig grosse Fläche.

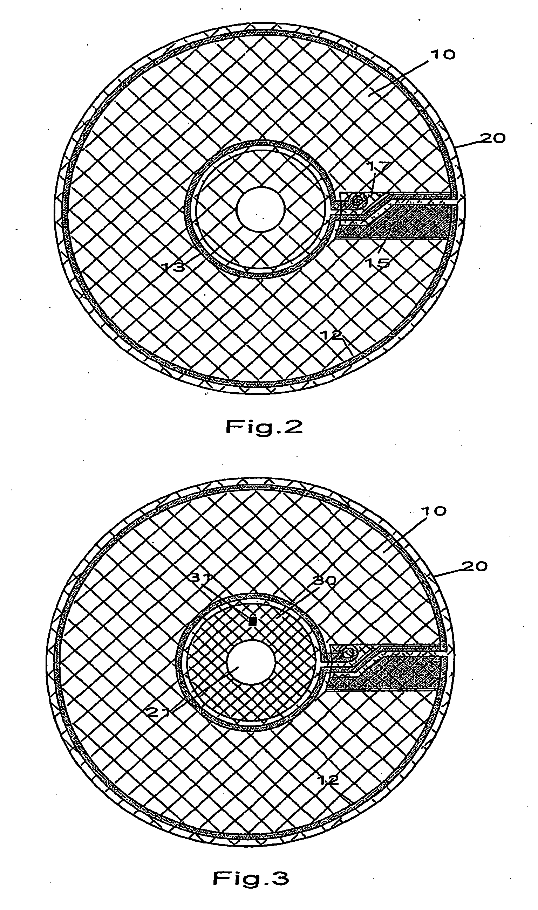

Fig. 2 zeigt die Resonanzetikette 10 von Fig. 1 in Aufsicht mittels der Kleberschicht 19 aufgeklebt auf eine mit einer groben Kreuzschraffur kenntlich gemachten CD 20, welche, wie dies bei CD's generell der Fall ist, mit einer metallischen Reflexionsschicht versehen sein soll. Die Grösse der Resonanzetikette 1 ist derart an die Grösse der CD 20 angepasst, dass sie ziemlich genau bis zu deren äusserem Rand reicht. Die äussere Windung 12 der Resonanzetikette 10 verläuft dadurch im wesentlichen entlang des äusseren Randes der CD 20. Auf Grund dieser Ausbildung lässt sich die Resonanzetikette 10 selbst vor der Metallisierungsschicht der CD 20 noch gut detektieren.

Im Abstandsbereich zwischen der äusseren 12 und der inneren Windung 13 ist durch das transparente Foliensubstrat 11 sowie durch die transparente Kleberschicht 19 hindurch die Oberfläche der CD 20 und ein fort ggf. vorhandener Aufdruck zu erkennen. Die Resonanzetikette 10 kann dadurch trotz ihrer Grösse auch auf vorbedruckten CD's aufgebracht werden, wobei deren Aufdruck sichtbar bleibt. Die beiden Kondensatorplatten 15 und 17 fallen dabei kaum störend ins Gewicht.

Fig. 3 zeigt die Resonanzetikette 10 von Fig. 1 aufgeklebt auf eine CD 20 zusammen mit einer konzentrisch zu bzw. in ihr angeordneten, ebenfalls kreisringförmigen, wesentlich kleineren Resonanzetikette 30. Bei dieser handelt es sich z.B. um eine der eingangs erwähnten speziellen Resonanzetiketten. Die genaue Ausbildung dieser Resonanzetikette 30 ist in Fig. 3 nicht näher dargestellt und für die vorliegende Betrachtung auch nicht weiter von Bedeutung. Sie ist jedoch beispielsweise mit mehreren, vorzugsweise entlang ihres äusseren Randes um ihr Zentrum herumgeführten Windungen zur Ausbildung einer Schwingkreisinduktivität versehen. Ausserdem ist sie mit einem Halbleiterchip 31 ausgerüstet und damit als RFID-Etikette ausgebildet. Sie braucht nicht transparent zu sein. Mittels einer rückseitigen Kleberschicht ist sie beispielsweise auf die CD 20 um deren zentrales Loch herum aufgeklebt.

In der dargestellten Anordnung wirkt die grössere Resonanzetikette 10 für die kleinere Resonanzetikette 30 wie ein Wellensammler, indem sie das elektromagnetische Feld eines äusseres Senders äusserst wirksam einfängt und per elektromagnetischer Kopplung an die innenliegende weitere Resonanzetikette 30 weiterleitet. Umgekehrt nimmt die Resonanzetikette 10 Signale, die von der weiteren Resonanzetikette 30 ausgesendet werden, wirksam auf und leitet diese wirkungsvoller nach aussen weiter. Die weitere Resonanzetikette 30 ist in dieser Konstellation selbst dann noch detektierbar und ansprechbar, wenn die CD 20 vollständig, d.h. bis nach innen bis zu ihrem zentralen Loch 21 hin metallisiert sein sollte.

Günstig für die gegenseitige Kopplung der beiden Resonanzetiketten 10 und 30 ist die Tatsache, dass die innere Windung 13 der Resonanzetikette 10 relativ weit innen und insofern nur mit geringem Abstand von den (nicht dargestellten) Windungen der weiteren Etikette 30 angeordnet ist. Durch Variation des Radius der inneren Windung 13 lässt sich dieser Kopplungsgrad mit Vorteil sogar je nach Bedarf in gewissen Grenzen einstellen.

Die weiteren Resonanzetiketten können mit noch mehr als insgesamt nur zwei Windungen versehen sein. So könnten zwei innere, zueinander eng benachbarte Windungen vorhanden sein. Mehr Windungen bedeutet generell mehr umspannter Feldfluss und damit eine höhere Spannung am Halbleiterchip der dadurch früher anspricht. Auf der anderen Seite wird man jedoch versucht sein, mit möglichst wenig Windungen auszukommen und zwar schon allein deswegen, weil man die Oberfläche der Datenträger in dem Bereich, wo sie üblicherweise mit einen Aufdruck versehen sind, möglichst wenig abdecken möchte.

### BEZEICHNUNGSLISTE

- 10: Resonanzetikette
- 11: Foliensubstrat
- 12: äussere Windung
- 13: innere Windung
- 14: Querverbindung
- 15: erste Kondensatorplatte
- 16: Kontaktzone
- 17: zweite Kondensatorplatte
- 18: Durchkontaktierung
- 19: Kleberschicht
- 20: CD
- 21: zentrales Loch der CD
- 30: RFID- Resonanzetikette
- 31: Halbleiterchip der RFID-Resonanzetikette

## Patentansprüche

1. Datenträger (20) wie eine CD, eine DVD oder eine MO, welcher mit einer Metallisierung als optische Reflexionsschicht versehen ist, welcher rund um ein zentrales Loch (21) eine innere, nicht mit Daten beschriebene Zone aufweist und welche zur Ermöglichung seiner elektromagnetischen Fern-Identifikation mit einer Frequenz im RF-Bereich mit einer in der genannten Zone rund um das zentrale Loch auf ihn aufgeklebten, auf die genannte Frequenz abgestimmte RFID-Resonanzetikette (30) versehen ist, welche ihrerseits mit einem Halbleiterchip (31) versehen ist, in welchem spezifische Informationen bezüglich des jeweiligen Datenträgers (20) gespeichert werden können oder sind und welcher Halbleiterchip (31) über den Schwingkreis der RFID-Resonanzetikette (30) elektromagnetische Signale empfangen und aussenden kann und mit elektrischer Energie versorgbar ist, **dadurch gekennzeichnet, dass** der Datenträger (20) zur Verbesserung seiner elektromagnetischen Fem-Identifikation mit einer weiteren, ebenfalls rund um das zentrale Loch (21) herum auf ihn aufgeklebten und auf die genannte Frequenz abgestimmten Resonanzetikette (10) beklebt ist, und wobei die weitere Resonanzetikette (10) als Teil ihres elektrischen Schwingkreises (12 - 18) auf einem eigenen, transparenten Foliensubstrat (11) eine äussere Windung (12) aufweist, die im wesentlichen entlang des äusseren Randes des Datenträgers geführt ist.

2. Datenträger nach Anspruch 1, **dadurch gekennzeichnet, dass** die weitere Resonanzetikette (10) als Teil ihres elektrischen Schwingkreises (12 - 18) noch mindestens eine innere Windung (13) aufweist, wobei zwischen der äusseren (12) und der mindestens einen inneren Windung (13) ein grösserer, vorzugsweise wenigstens etwa dem halben Radius der äusseren Windung (12) entsprechender Abstand belassen ist.

3. Datenträger nach Anspruch 2, **dadurch gekennzeichnet, dass** die weitere Resonanzetikette (10) zwei innere, eng benachbarte Windungen aufweist.

4. Datenträger nach einem der Ansprüche 2 oder 3, **dadurch gekennzeichnet, dass** die weitere Resonanzetikette (10) als Teile ihres elektrischen Schwingkreises (12 - 18) im Abstandsbereich zwischen der äusseren und der mindestens einen inneren Windung zwei in gegenseitiger Überdeckung befindliche Kondensatorplatten (15, 17) aufweist.

5. Datenträger nach einem der Ansprüche 2 - 4, **dadurch gekennzeichnet, dass** die äussere (12) und die mindestens eine innere Windung (13) der weiteren Resonanzetikette (10) jeweils zwei Enden aufweisen, wobei ein Ende der äusseren Windung (12) über eine Querverbindung (14) mit einem Ende der inneren Windung (13) verbunden ist und wobei die jeweils anderen Enden mit jeweils einer anderen der zwei Kondensatorplatten (15, 17) verbunden sind.

6. Datenträger nach einem der Ansprüche 4 oder 5, **dadurch gekennzeichnet, dass** die alle Windungen (12, 13) und die Kondensatorplatten (15, 17) als Leiterbahnen auf dem Foliensubstrat (11) ausgebildet sind.

7. Datenträger nach einem der Ansprüche 1 - 6, **dadurch gekennzeichnet, dass** die Schwingkreise der RFID-Etikette (30) und der weiteren Resonanzetikette (10) auf dem Datenträger (20) auf die gleiche Resonanzfrequenz im Bereich zwischen 10 MHz und 20 MHz, insbesondere jedoch auf 13.56 MHz, abgestimmt sind.

8. Datenträger nach einem der Ansprüche 1 - 7, **dadurch gekennzeichnet, dass** die weitere Resonanzetikette (10) Mittel aufweist, welche den Einfluss vom Objekt herrührender Streukapazitäten auf ihre Resonanzfrequenz vermindern.

9. Datenträger nach einem der Ansprüche 1 - 8, **dadurch gekennzeichnet, dass** die RFID-Resonanzetikette (30) und die weitere Resonanzetikette (10) in gegenseitiger elektromagnetischer Kopplung auf dem Datenträger (20) angeordnet sind.

10. Datenträger nach einem der Ansprüche 1 - 9, **dadurch gekennzeichnet, dass** die RFID-Resonanzetikette (30) vollständig innerhalb der Windung/en der weiteren Resonanzetikette (10) und insbesondere konzentrisch zu dieser angeordnet ist.

## Claims

1. Data carrier (20) such as a CD, DVD or MO, which is provided with plating as an optical reflective layer, has an inner zone around a central hole (21) that is not written with data, and, to enable its electromagnetic remote identification with a frequency in the RF range, is provided with an RFID resonance label (30) that is stuck onto it in the above-mentioned zone around the central hole and tuned to the stated frequency, which RFID resonance label is provided with a semiconductor chip (31), in which specific information regarding the respective data carrier (20) can be or is stored, and which semiconductor chip (31) can receive and transmit electromagnetic signals via the oscillating circuit of the RFID resonance label (30) and can be provided with electrical energy, **characterised in that** the data carrier (20), in order to improve its electromagnetic remote identification, is bonded with an additional resonance label (10) that is also stuck onto it around the central hole (21) and tuned to the stated frequency, and with the additional resonance label (10) having an outer coil (12) as part of its electrical oscillating circuit (12-18) on a separate, transparent film substrate (11), which outer coil is largely guided along the outer edge of the data carrier.

2. Data carrier according to claim 1, **characterised in that** the additional resonance label (10) also has at least one inner coil (13) as part of its electrical oscillating circuit (12-18), with a larger distance, preferably corresponding to at least around half the radius of the outer coil (12), being left between the outer (12) and the at least one inner coil (13).

3. Data carrier according to claim 2, **characterised in that** the additional resonance label (10) has two inner, closely adjacent coils.

4. Data carrier according to one of claims 2 or 3, **characterised in that** the additional resonance label (10) has two mutually overlapping capacitor plates (15, 17) as parts of its electrical oscillating circuit (12-18) in the space between the outer and the at least one inner coil.

5. Data carrier according to one of claims 2 to 4, **characterised in that** the outer (12) and the at least one inner coil (13) of the additional resonance label (10) have at least two ends, with one end of the outer coil (12) being connected to one end of the inner coil (13) via a cross connection (14) and with the other ends being connected to another of the two capacitor plates (15, 17).

6. Data carrier according to one of claims 4 or 5, **characterised in that** all the coils (12, 13) and the capacitor plates (15, 17) are executed as conductor tracks on the film substrate (11).

7. Data carrier according to one of claims 1 to 6, **characterised in that** the oscillating circuits of the RFID label (30) and of the additional resonance label (10) on the data carrier (20) are tuned to the same resonance frequency in the range between 10 MHz and 20 MHz, in particular to 13.56 MHz.

8. Data carrier according to one of claims 1 to 7, **characterised in that** the additional resonance label (10) has means that reduce the influence of stray capacitance caused by the object on its resonance frequency.

9. Data carrier according to one of claims 1 to 8, **characterised in that** the RFID resonance label (30) and the additional resonance label (10) are arranged in mutual electromagnetic coupling on the data carrier (20).

10. Data carrier according to one of claims 1 to 9, **characterised in that** the RFID resonance label (30) is arranged totally within the coil(s) of the additional resonance label (10) and in particular concentrically thereto.

## Revendications

1. Support de données (20) tel qu'un CD, un DVD ou un MO, lequel est muni d'une couche de réflexion optique par métallisation, lequel présente une zone ronde sans écriture de données entourant un orifice central (21) intérieur et est muni, pour rendre possible son identification électromagnétique à distance à l'aide d'une fréquence dans la bande RF, d'une étiquette de résonnance-RFID (30) accordée à ladite fréquence, laquelle est munie de son côté d'une puce en semiconducteur (31), dans laquelle des informations spécifiques relatives à ce support de données (20) particulier sont ou peuvent être mémorisées et laquelle puce en semiconducteur (31) peut être alimentée en énergie électrique et envoyer et recevoir des signaux électromagnétiques grâce au circuit oscillant de l'étiquette de résonnance-RFID (30), **caractérisé en ce que**, pour l'amélioration de son identification électromagnétique à distance, le support de données (20) reçoit par collage une étiquette de résonnance (10) supplémentaire accordée à ladite fréquence, elle aussi ronde et entourant l'orifice central (21), et où l'étiquette de résonnance (10) supplémentaire présente, sur un film substrat transparent (11) spécifique, un enroulement extérieur (12) faisant partie de son circuit de résonnance (12-18), lequel enroulement extérieur est situé essentiellement le long de la bordure extérieure du support de données.

2. Support de données selon la revendication 1, **caractérisé en ce que** l'étiquette de résonnance supplémentaire (10) présente en outre au moins un enroulement intérieur (13) faisant partie de son circuit oscillant (12-18), avec entre l'enroulement extérieur (12) et le au moins un enroulement intérieur (13) un intervalle important, de préférence d'au moins à peu près la moitié du rayon de l'enroulement extérieur (12).

3. Support de données selon la revendication 2, **caractérisé en ce que** l'étiquette de résonnance supplémentaire (10) présente deux enroulements intérieurs étroitement voisins.

4. Support de données selon l'une quelconque des revendications 3 ou 4, **caractérisé en ce que** l'étiquette de résonnance supplémentaire (10) présente, dans l'intervalle entre l'enroulement extérieur et le au moins un enroulement intérieur, deux plaques de condensateur (15, 17) situées en recouvrement l'une de l'autre sur les faces opposées et faisant partie de son circuit oscillant (12-18).

5. Support de données selon l'une quelconque des revendications 2 à 4, **caractérisé en ce que** l'enroulement extérieur (12) et le au moins un enroulement intérieur (13) de l'étiquette de résonnance supplémentaire (10) présentent chacun deux extrémités, dans lequel une extrémité de l'enroulement extérieur (12) est connectée par une liaison traversante avec une extrémité de l'enroulement intérieur (13) et dans lequel chacune des autres extrémités est connectée avec une extrémité de chacune des plaques de condensateur (14, 17).

6. Support de données selon l'une quelconque des revendications 4 ou 5, **caractérisé en ce que** tous les enroulements (12, 13) et les plaques de condensateur (15, 17) sont réalisés sous la forme de pistes conductrices sur le film substrat (11).

7. Support de données selon l'une quelconque des revendications 1 à 6, **caractérisé en ce que**l les circuits oscillants de l'étiquette-RFID (30) et de l'étiquette de résonnance supplémentaire (10) sur le support de données (20) sont accordés sur la même fréquence de résonnance dans la bande entre 10 MHz et 20 MHz, et notamment chacun sur 13,56 MHz.

8. Support de données selon l'une quelconque des revendications 1 à 7, **caractérisé en ce que** l'étiquette de résonnance supplémentaire (10) présente des moyens pour diminuer l'influence des capacités parasitaires générées par l'objet à la fréquence de résonnance.

9. Support de données selon l'une quelconque des revendications 1 à 8, **caractérisé en ce que** l'étiquette de résonnance-RFID (30) et l'étiquette de résonnance supplémentaire (10) sont agencées sur le support de données pour un couplage électromagnétique entre faces opposées.

10. Support de données selon l'une quelconque des revendications 1 à 9, **caractérisé en ce que** l'étiquette de résonnance-RFID (30) est agencée pour être entièrement comprise à l'intérieur de l'étiquette de résonnance supplémentaire (10), notamment de façon concentrique avec elle.
